# FASCICULE DE BREVET EUROPEEN

(11) **EP 3 507 532 B1**
(45) Date de publication et mention de la délivrance du brevet: **18.11.2020**
(21) Numéro de dépôt: 17758549.4
(22) Date de dépôt: 30.08.2017
(51) Int. Cl.: F16L 11/08, F16L 11/16

(54) **ELÉMENT D'ARMURE D'UNE LIGNE FLEXIBLE DESTINÉE À ÊTRE PLACÉE DANS UNE ÉTENDUE D'EAU, ET LIGNE FLEXIBLE ASSOCIÉE**
ELEMENT ZUR VERSTÄRKUNG EINER FLEXIBLEN LEITUNG ZUR PLATZIERUNG IN EINEM GEWÄSSER UND ZUGEHÖRIGE FLEXIBLE LEITUNG
ELEMENT FOR REINFORCING A FLEXIBLE LINE INTENDED FOR BEING PLACED IN A BODY OF WATER, AND ASSOCIATED FLEXIBLE LINE

(30) Priorité: 02.09.2016 FR 1658189
(43) Date de publication de la demande: 10.07.2019
(73) Titulaire: Technip France, 92400 Courbevoie (FR)
(72) Inventeur: MAURICE, Julien, 76480 Duclair (FR); HOUOT, Bernard, 76360 Bouville (FR)
(74) Mandataire: Lavoix
(86) Numéro de dépôt international: PCT/EP2017/071699
(87) Numéro de publication internationale: WO 2018/041857

(56) Documents cités:
- WO-A1-99/49259
- FR-A1- 3 022 320
- US-A- 5 645 109
- US-A1- 2015 354 292

## Description

La présente invention concerne un élément d'armure d'une ligne flexible destinée à être placée dans une étendue d'eau, comportant un corps longiligne en matériau composite, le corps longiligne délimitant une surface intérieure destinée à être orientée vers un axe central de la ligne flexible et une surface extérieure destinée à être orientée à l'opposé d'un axe central de la ligne flexible.

La ligne flexible est avantageusement une conduite flexible telle que décrite dans les documents normatifs publiés par l'American Petroleum Institute (API), API 17J (4ème édition - Mai 2014) et API RP 17B (5ème édition - mars 2014) bien connus de l'homme du métier.

Cette définition englobe indifféremment les conduites flexibles de type non lié (« unbonded » en anglais) ou de type lié (« bonded » en anglais).

De manière générale, une conduite flexible comprend au moins une gaine polymérique (appelée « gaine interne d'étanchéité » ou « gaine de pression ») au sein de laquelle circule un fluide et au moins une couche de renfort.

La ligne flexible est en variante une conduite flexible de type « bundle » (« Integrated Production Bundle », ou « IPB » en anglais) comprenant au moins une gaine polymérique dans laquelle circule un fluide, au moins une couche de renfort et un ensemble de liens électriques, hydrauliques ou optiques arrangés autour de la conduite flexible propre à transporter une puissance électrique ou hydraulique, ou une information.

Dans encore une autre variante, la ligne flexible est un ombilical comprenant un assemblage de plusieurs conduites étanches (métalliques ou polymériques) de diamètre interne largement inférieur au diamètre interne de l'ombilical et de câbles électriques, optiques et/ou hydrauliques. Avantageusement, l'assemblage comprend des couches de renfort et une gaine externe polymérique de protection.

De telles lignes flexibles sont utilisées notamment en mer profonde dans l'industrie pétrolière et gazière, et s'étendent généralement à travers une étendue d'eau entre une installation de surface et un ensemble de fond. Ces lignes flexibles peuvent également s'étendre au fond de l'étendue d'eau entre des installations de fond ou entre deux installations de surface.

Pour utiliser les lignes flexibles dans ce type d'applications, il est nécessaire de les renforcer, compte tenu des efforts et des pressions appliquées sur la ligne.

Plus particulièrement, les lignes flexibles peuvent être utilisées à des profondeurs comprises entre 100 m et 5000 m. La pression hydrostatique s'exerçant sur ces lignes flexibles peut donc atteindre 500 bar.

En outre, et notamment lorsque la ligne flexible est une conduite flexible comprenant une gaine externe d'étanchéité, elle peut, au cours de son fonctionnement, subir des décompressions rapides (« shut down » en langue anglaise) résultant d'un arrêt brutal de la production. Or, les gaz contenus dans le fluide transporté ont tendance à diffuser à travers la gaine interne d'étanchéité et s'accumuler au sein de l'espace annulaire formé par la gaine interne d'étanchéité et la gaine externe d'étanchéité. Ainsi, lors de ces arrêts de production, la pression au sein de l'espace annulaire peut devenir supérieure à la pression à l'intérieur de la conduite, provoquant l'effondrement de la gaine interne d'étanchéité.

Afin de reprendre ces efforts de pression, la conduite flexible comprend une carcasse interne permettant de s'affranchir des risques d'effondrement de la gaine interne d'étanchéité. La carcasse interne est généralement constituée d'éléments longitudinaux métalliques enroulés hélicoïdalement à pas court. Ces éléments longitudinaux sont des feuillards ou des fils en acier inoxydable agencés en spires agrafées les unes aux autres. Avantageusement, la carcasse interne est réalisée en profilant un feuillard en forme de S, puis en l'enroulant en hélice, de façon à agrafer entre elles les spires adjacentes.

En outre, la conduite flexible est également soumise à la pression interne résultant de la mise en circulation du fluide. Afin d'éviter l'éclatement de la gaine interne d'étanchéité, la conduite flexible comprend une voûte de pression agencée autour de la gaine interne d'étanchéité. La voûte de pression est constituée d'éléments longitudinaux enroulés à pas court, par exemple, des fils métalliques de section en forme de Z (zêta), C, T (téta), U, K ou X agencés en spires agrafées les unes aux autres.

Par ailleurs, la tension en tête de ligne flexible peut atteindre plusieurs centaines de tonnes, notamment lorsque celle-ci est utilisée dans de grandes profondeurs.

Pour pallier ces efforts, la ligne flexible comprend donc au moins une nappe d'armures de traction destinée à reprendre les efforts axiaux s'exerçant sur la ligne flexible. Les nappes d'armures de traction sont généralement constituées de deux couches d'armures formées par des éléments métalliques enroulés selon des pas longs autour de la ligne flexible.

Il existe des applications basse pression, notamment pour les lignes flexibles s'étendant entre deux installations de surface, pour lesquelles la voûte de pression n'est pas indispensable. Dans un tel cas, les éléments d'armures de traction sont enroulés avec des angles d'hélice de valeur absolue proche de 55° pour reprendre les efforts axiaux et radiaux s'exerçant sur la ligne flexible.

La notion d'enroulement à pas court désigne tout enroulement hélicoïdal selon un angle d'hélice proche de 90°, typiquement compris entre 75° et 90°. La notion d'enroulement à pas long recouvre quant à elle les angles d'hélice inférieurs à 60°, typiquement compris entre 25° et 55° pour les nappes d'armures de traction.

Les nappes d'armures de traction métalliques présentent le désavantage d'être sensibles à la corrosion, et de présenter un poids élevé.

Ceci est particulièrement critique en eaux profondes, puisque la tension de pose, qui est une fonction directe du poids de la ligne flexible, augmente avec la profondeur.

Pour réduire le poids des lignes flexibles et permettre leur utilisation à plus grande profondeur, la demande de brevet WO 99/49259 de la Demanderesse décrit des armures composites, réalisées à base de fibres de carbone.

Les armures sont formées à base d'éléments d'armures du type précité, comprenant une matrice plastique en forme de ruban et des filaments longitudinaux de fibres de carbone, de préférence organisés sous forme de mèches, qui sont noyées dans la matrice. De telles armures représentent ainsi environ 1/7ème du poids des armures métalliques.

Un tel ruban présente des caractéristiques mécaniques très satisfaisantes, compte tenu de la haute ténacité et de la grande inertie chimique des fibres de carbone. De plus, le coût des fibres de carbone est relativement faible par rapport à celui d'autres fibres.

De telles armures sont généralement très robustes et permettent à la ligne flexible d'être disposée dans l'étendue d'eau pendant des périodes de temps très longues.

Ces armures présentent donc une résistance mécanique longitudinale très élevée. Cependant, de telles armures sont relativement sensibles dans la direction transverse, en particulier lorsque des contraintes de cisaillement s'appliquent dans cette direction, sous l'effet par exemple d'une courbure de la ligne flexible.

En particulier, lorsque les chargements appliqués à la ligne flexible induisent une déformation transverse des armures de l'ordre de 1%, il existe un risque de création de fissures et de propagation des fissures longitudinalement au sein des armures.

La demande de brevet WO 99/49259 décrit une solution permettant de répondre partiellement au problème de déchirement de la matrice en fournissant un film extérieur pour renforcer l'élément d'armure. Cette solution n'est pas entièrement satisfaisante en ce que le film est adapté pour des armures composites d'épaisseur allant jusqu'à 1 mm. Or, compte tenu de la profondeur d'utilisation des lignes flexibles, les règles de conception imposent désormais des épaisseurs d'armures comprises entre 2 mm et 2,5 mm.

En outre, l'augmentation de l'épaisseur des armures pour répondre à ces normes favorise le phénomène de séparation longitudinale des armures.

En effet, l'augmentation de l'épaisseur conduit généralement à une diminution de la résistance longitudinale des armures, puisque l'efficacité de fabrication diminue lorsque l'épaisseur augmente.

Il peut également être envisagé d'augmenter la largeur des armures afin de limiter leur dégradation. Une telle solution n'est pas satisfaisante en ce que l'augmentation de la largeur des armures conduit à une pression de contact plus élevée en service, qui engendre un moment transverse de courbure plus élevé, susceptible à son tour de conduire à une séparation longitudinale des armures.

US 5 645 109 décrit un fil d'armure présentant un creux plat.

Un but de l'invention est donc d'obtenir un élément d'armure pour une ligne flexible destinée à être posée à grande profondeur, qui présente une résistance longitudinale élevée, et un risque limité de détérioration mécanique.

À cet effet, l'invention a pour objet un élément selon la revendication 1.

L'élément selon l'invention peut comprendre l'une ou plusieurs des caractéristiques des revendications 2 à 13 ou des caractéristiques suivantes, prise(s) isolément ou suivant toute combinaison techniquement possible :
- les spires successives de l'élément d'armure, en particulier les surfaces latérales des spires successives de l'élément d'armure, sont disposées adjacentes les unes aux autres sans recouvrement ;
- le sommet est ponctuel ;
- la largeur du sommet est inférieure à 5% de la largeur maximale du corps longiligne, prises suivant un axe transversal du corps.

L'invention a aussi pour objet une ligne flexible selon la revendication 14 ou 15 .

L'invention sera mieux comprise à la lecture de la description qui va suivre, donnée uniquement à titre d'exemple, et faite en se référant aux dessins annexés, sur lesquels :
- la figure 1 est une vue en perspective partiellement écorchée d'un tronçon central d'une première conduite flexible selon l'invention ;
- la figure 2 est une vue, prise en coupe suivant un plan transversal d'un élément d'armure de la conduite de la figure 1 ;
- les figures 3 à 9 sont des vues analogues à la figure 2, illustrant des variantes d'éléments d'armure selon l'invention ;
- la figure 10 est une vue analogue à la figure 1 d'une deuxième conduite flexible selon l'invention.

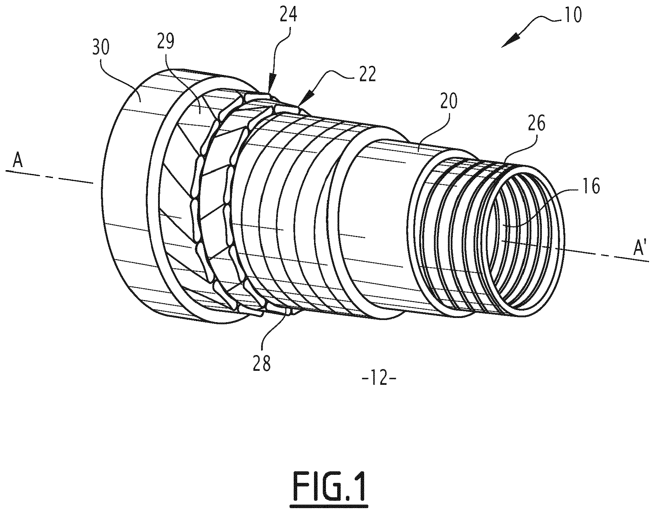

Une première ligne flexible 10 selon l'invention est illustrée par la figure 1.

La ligne flexible 10 est disposée à travers une étendue d'eau 12 dans une installation d'exploitation de fluide, notamment d'hydrocarbures.

L'étendue d'eau 12 est par exemple un lac, une mer ou un océan. La profondeur de l'étendue d'eau 12 au droit de l'installation est par exemple comprise entre 100 m et 5000 m, généralement 2000 m.

L'installation comporte un ensemble de surface et un ensemble de fond (non représentés) ou deux ensembles de surface qui sont avantageusement raccordés entre eux par la ligne flexible 10.

L'ensemble de surface est par exemple flottant. Il est avantageusement formé par une unité flottante de production, de stockage et de déchargement appelée FPSO (« Floating Production, Storage and Offloading » en langue anglaise), une unité flottante dédiée au gaz naturel liquéfié appelée FLNG (« Floating Liquified Natural Gas » en langue anglaise), une plate-forme semi-submersible ou une bouée de déchargement. En variante, l'ensemble de surface est une structure rigide fixe de type « jacket » ou une structure oscillante assujettie au fond de la mer pouvant être par exemple un TLP (« Tension Leg Platform » en langue anglaise).

Dans cet exemple, la ligne flexible 10 raccorde l'ensemble de fond à l'ensemble de surface. La ligne flexible 10 est donc partiellement immergée dans l'étendue d'eau 12 et présente une extrémité supérieure disposée dans un volume d'air.

En variante, la ligne flexible 10 est totalement immergée dans l'étendue d'eau 12 et raccorde par exemple deux ensembles de fond (non représentés) entre eux.

Une autre variante consiste en une ligne flexible 10 partiellement immergée dans l'étendue d'eau 12 et raccordant par exemple deux ensembles de surface (typiquement une bouée de déchargement et un FPSO). Ceci est notamment le cas des lignes flexibles de type OOL (« Oil Offloading Line » en langue anglaise).

La ligne flexible 10 comporte au moins un élément allongé, ici une gaine interne 20, et au moins un élément d'armure 29 selon l'invention, enroulé autour de l'élément allongé.

Dans l'exemple représenté sur la figure 1, la première ligne flexible 10 est une conduite flexible destinée à transporter un fluide, notamment des hydrocarbures. Elle délimite ainsi un passage central 16 de circulation de fluide. Une telle conduite est par exemple décrite dans les documents normatifs publiés par l'American Petroleum Institute (API), API 17J (4^{ème} édition - Mai 2014) et API RP 17B (5^{ème} édition - Mai 2014).

L'élément allongé de la ligne flexible 10 est constitué par une gaine interne 20. La ligne flexible 10 comprend au moins une couche d'armures 22, 24 disposée autour de la gaine interne 20.

Avantageusement et selon l'utilisation souhaitée, la ligne flexible 10 comporte en outre une carcasse interne 26 disposée à l'intérieur de la gaine interne 20, une voûte de pression 28, intercalée entre la gaine interne 20 et la ou chaque couche d'armures 22, 24, et une gaine externe 30, destinée à la protection de la conduite flexible.

La gaine interne 20 est destinée à confiner de manière étanche le fluide transporté dans le passage central 16. Elle est formée en matière plastique, par exemple à base d'une polyoléfine, tel que du polyéthylène, à base d'un polyamide tel que du PA11 ou PA12, ou à base d'un polymère fluoré tel que du polyfluorure de vinylidène (PVDF).

L'épaisseur de la gaine interne 20 est par exemple comprise entre 5 millimètres et 20 millimètres.

La carcasse interne 26, lorsqu'elle est présente, est formée d'un feuillard métallique profilé, enroulé en spirale. Les spires du feuillard sont agrafées les unes aux autres, ce qui permet de reprendre les efforts radiaux d'écrasement.

Dans cet exemple, la carcasse interne 26 est disposée à l'intérieur de la gaine interne 20. La conduite est de type « rough bore ».

En variante, (non représentée) la conduite flexible est dépourvue de carcasse interne 26. Elle est alors désignée par le terme anglais « smooth bore ».

L'enroulement hélicoïdal du feuillard métallique profilé formant la carcasse interne 26 est à « pas court », c'est-à-dire qu'il présente un angle d'hélice de valeur absolue proche de 90°, typiquement comprise entre 75° et 90°.

Dans cet exemple, la voûte de pression 28 est destinée à reprendre les efforts liés à la pression régnant à l'intérieur de la gaine interne 20. Elle est par exemple formée d'un fil profilé enroulé en hélice autour de la gaine interne 20. Le fil profilé présente généralement une section complexe, notamment en forme de Z, de T, de U, de K, de X ou de I.

Les spires du fil profilé sont généralement agrafées les unes aux autres. L'agrafage des spires maintient un jeu prédéfini entre deux spires du fil profilé. Ceci limite le fluage de la gaine interne 20.

La voûte de pression 28 est généralement enroulée en hélice à pas court autour de la gaine interne 20.

La ligne flexible 10 selon l'invention comprend au moins une couche d'armures 22, 24, formée d'un enroulement hélicoïdal d'éléments d'armures 29.

Dans l'exemple représenté sur la figure 1, la ligne flexible 10 comporte une pluralité de couches d'armures 22, 24.

Chaque couche d'armures 22, 24 comporte des éléments d'armures 29 enroulés à pas long autour de l'axe A-A' de la conduite. Par « enroulé à pas long », on entend que la valeur absolue de l'angle d'hélice est inférieure à 60°, et est typiquement comprise entre 25° et 55°.

Chaque couche d'armures 22, 24 comprend au moins 20 éléments d'armures 29 et préférentiellement entre 20 et 60 éléments d'armures 29.

Le jeu latéral entre les éléments d'armures 29 est d'au moins 3% du périmètre externe de la section transversale de la couche intérieure 41 sur laquelle repose les couches d'armures 22, 24, et est avantageusement compris entre 3% et 15% dudit périmètre. Le jeu latéral est entendu comme la somme des jeux entre chaque élément d'armure 29.

Les éléments d'armures 29 d'une première couche d'armures 22 sont enroulés généralement suivant un angle opposé par rapport aux éléments d'armures 29 d'une deuxième couche d'armures 24. Ainsi, si l'angle d'enroulement des éléments 29 de la couche 22 est égal à +α, α étant compris entre 25° et 55°, l'angle d'enroulement des éléments d'armures 29 de la deuxième couche d'armures 24 disposée au contact de la première couche d'armures 22, est par exemple de -α, avec α compris entre 25° et 55°.

Une variante pourrait consister en une ligne flexible 10 comprenant :
- une gaine interne 20 ;
- une pluralité de couches d'armures 22, 24 comprenant des éléments d'armures 29 enroulés avec un angle d'hélice proche de 55°. Les éléments d'armures 29 de la couche d'armures 22 étant enroulés dans un sens opposé par rapport aux éléments d'armures 29 de la couche d'armures 24. Ceci est notamment le cas des conduites flexibles OOL citées ci-dessus.

Pour les applications en grande profondeur (supérieure à 1500 m), on préfèrera les lignes flexibles 10 comprenant une voûte de pression 28.

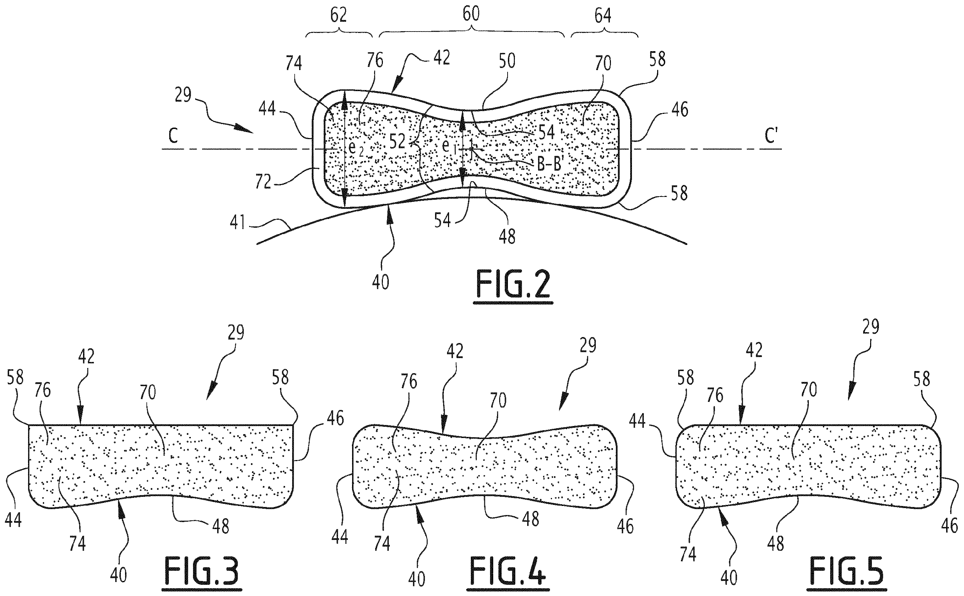

En référence à la figure 2, selon l'invention, chaque élément d'armure 29 est formé d'un corps longiligne en matériau composite. Le corps longiligne définit une surface intérieure 40 destinée à s'orienter vers l'axe A-A' de la ligne flexible 10 et à s'appuyer sur une couche intérieure 41 de la ligne flexible 10, et une surface extérieure 42 opposée, destinée à s'étendre à l'opposé de l'axe A-A' de la ligne flexible 10.

Les éléments d'armures 29 peuvent se déplacer latéralement sur la couche 41 librement. Par « librement », il est entendu qu'aucune butée mécanique ne limite les déplacements des éléments d'armures 29 sur la couche intérieure 41. En effet, la couche intérieure 41 est formée d'un tube extrudé tel qu'une gaine polymérique anti-usure ou formée d'un enroulement de bandes ou de fils enroulés en hélice à pas court tel que la voûte de pression 28. Les éléments d'armures 29 sont enroulés avec un angle d'hélice différent de l'angle d'hélice des bandes ou fils formant la couche intérieure 41. Ceci empêche l'agrafage des éléments d'armures 29 au sein des éventuels déjoints formés par l'enroulement en hélice des fils ou des bandes de la couche intérieure 41.

Le corps longiligne comporte, entre la surface intérieure 40 et la surface extérieure 42, des surfaces latérales 44, 46, situées de part et d'autre d'un axe longitudinal B-B' du corps longiligne.

Dans cet exemple, la surface intérieure 40 et la surface extérieure 42 définissent chacune un creux 48, 50 débouchant respectivement vers l'intérieur et vers l'extérieur de la ligne flexible 10 entre les surfaces latérales 44, 46.

Ainsi, en section transversale perpendiculaire à l'axe longitudinal B-B', le corps longiligne présente un contour généralement allongé suivant un axe transversal C-C' perpendiculaire à l'axe longitudinal B-B'. Dans l'exemple particulier de la figure 2, le contour présente généralement une forme d'os.

La largeur maximale du corps longiligne, prise le long de l'axe C-C,' est de préférence comprise entre 10 mm et 30 mm. L'épaisseur maximale du corps longiligne, prise perpendiculairement à l'axe C-C' est généralement comprise entre 1 mm et 3 mm.

La largeur du corps longiligne, prise le long de l'axe C-C' est préférentiellement supérieure au 10^{ème}, et préférentiellement supérieure au 20^{ème} du diamètre externe de la couche intérieure 41.

Dans cet exemple, les creux 48, 50 sont sensiblement symétriques par rapport à l'axe B-B'.

La largeur de chaque creux 48, 50 est inférieure à 80 % de la largeur maximale du corps longiligne. Cette largeur est par exemple comprise entre 15% et 30% de la largeur du corps longiligne, avantageusement entre 1,5 mm et 9 mm.

Une largeur de chaque creux 48, 50 comprise entre 15% et 30% de la largeur du corps longiligne permet une accommodation de l'élément d'armure 29 au rayon externe défini par la couche intérieure 41, tout en maximisant la section travaillante et ainsi améliore les caractéristiques mécaniques de l'élément d'armure 29.

En section dans un plan transversal, chaque creux 48, 50 est délimité par une ligne courbe 52 présentant un sommet 54 au point le plus profond du creux 48, 50.

La ligne courbe 52 évite une zone de sur contrainte au niveau d'un point anguleux généralement formé par une ligne droite, ce qui résulte en un élément d'armure 29 plus résistant mécaniquement. En outre, la ligne courbe 52 permet de mieux répartir les déformations transverses au sein de l'élément d'armure 29. Par ailleurs, par opposition à la ligne courbe 52, une ligne droite imposerait à l'élément d'armure 29 un rayon de courbure trop important pour éviter le point anguleux ou en imposerait un autre au niveau des points d'inflexion, ce qui fragiliserait l'élément d'armure 29.

La ligne courbe 52 est sensiblement en forme de C. Le rayon de courbure moyen de la ligne courbe 52 est supérieur à 5 % du rayon externe définit par la couche intérieure 41 et est notamment compris entre 10 % et 30 % de ce rayon externe.

Un tel rayon de courbure réduit l'épaisseur de l'élément d'armure 29 au centre de l'élément d'armure 29. Ceci diminue les déformations transverses au sein de l'armure 29 et ainsi améliore ses propriétés mécaniques.

Le diamètre extérieur d'une conduite flexible est compris entre 210 mm et 1200 mm.

Avantageusement, la ligne courbe 52 est sensiblement continûment dérivable. Elle est ainsi dépourvue de cassure. La profondeur de chaque creux 48, 50 croit ainsi continûment.

Le sommet 54 est ponctuel, c'est-à-dire que sa largeur est inférieure à 5% de la largeur maximale du corps longiligne suivant l'axe C-C'.

Du fait de la présence de deux creux 48, 50 opposés, l'épaisseur e1 du corps longiligne, prise au niveau des sommets 54, perpendiculairement à l'axe C-C', est inférieure à l'épaisseur maximale e2 du corps longiligne, prise à l'écart des creux 48, 50.

La déformation transverse au centre de la surface supérieure 42 de l'élément d'armure 29 présentant deux creux opposés 48, 50 est sensiblement nulle. Le risque de fissuration de l'élément d'armure 29 est ainsi réduit. Aussi, la symétrie de l'élément d'armure 29 simplifie sa mise en œuvre et son installation autour de la conduite flexible, en ce que la surface inférieure 40 ou supérieure 42 de l'élément d'armure 29 peut être indifféremment apposée sur la couche intérieure 41 de la conduite flexible.

La profondeur de chaque creux 48, 50, prise au niveau du sommet 54, est comprise entre 10 % et 25 % de l'épaisseur maximale du corps longiligne e2. Cette profondeur est par exemple comprise entre 0,1 mm et 0,75 mm.

Les surfaces latérales 44, 46 sont ici incurvées et de préférence convexes. Elles s'étendent généralement transversalement par rapport à l'axe C-C'.

Alternativement, les surfaces latérales 44, 46 pourraient être concaves.

Les surfaces latérales 44, 46 définissent, en section dans un plan perpendiculaire à l'axe B-B', des coins 58 arrondis avec la surface intérieure 40 et avec la surface extérieure 42.

De manière alternative, les coins 58 pourraient être anguleux.

Le corps longiligne présente ainsi une région centrale amincie 60 située au niveau des creux 48, 50, destinée à être située en permanence à l'écart de la couche intérieure 41 sur laquelle repose l'élément d'armure 29 et deux régions latérales 62, 64, destinées à entrer en contact avec la couche intérieure 41 sur laquelle repose l'élément d'armure 29.

La largeur de la région centrale 60 est comprise entre 10 % et 40 % de la largeur totale maximale du corps longiligne.

Le corps longiligne est formé ici d'un cœur de renfort 70 central et d'une enveloppe 72 entourant totalement le cœur de renfort 70.

Le cœur de renfort 70 comporte une matrice 74 en polymère et des filaments de fibres 76 s'étendant longitudinalement, noyés dans la matrice 74.

La matrice 74 est formée à base d'une résine thermodurcissable, ou d'une résine thermoplastique.

La résine thermodurcissable est par exemple une résine époxy, une résine de type polyimide, telle qu'une résine bismaléimide, une résine polyuréthane ou polyisocyanurate, une résine aminoplaste, telle qu'une résine urée-formaldéhyde (UF), mélamine formaldéhyde (MF) ou phénol-formaldéhyde (PF), une résine polyester insaturé (UP), une résine vinylester (VE) ou un mélange de celles-ci.

Dans ce cas, le durcissement de la résine est effectué avantageusement par pultrusion, à une température inférieure à 280° C, notamment inférieure à 260°C, avantageusement comprise entre 200°C et 220°C. Dans certains cas, la température de durcissement de la résine est inférieure à 200°C et est notamment comprise entre 100°C et 200°C.

La résine formant la matrice 74 est réticulée, notamment en la maintenant à une température de traitement thermique pendant une durée supérieure à 24 heures, notamment de l'ordre de 48 heures. La température de ce traitement thermique est inférieure à 220°C, et notamment comprise entre 180°C et 220°C.

En variante, la résine est une résine thermoplastique, notamment choisie parmi les résines polyméthylméthacrylate (PMMA), polyacrylate, polyacrylonitrile (PAN), polyamide (PA ou Nylon), polyamide-imide (PAI), polyaryléthercétone (PAEK), polyoléfine telle qu'un polyéthylène (PE) ou un polypropylène (PP), polycarbonate (PC), polycétone (PK), polyester, polyétheréthercétone (PEEK), polyéthercétonecétone (PEKK), polyétherimide (PEI), polyimide (PI), polystyrène (PS), polyéthersulfone (PES), polyphénylène sulphide (PPS), polysulfone (PSU), polymère fluoré thermoplastique tel que le polyfluorure de vinylidène (PVDF), le polytétrafluoroéthylène (PTFE), le polychlorotrifluoroéthylène (PCTFE), le polyéthylène chlorotrifluoroéthylène (PECTFE) ou le polyéthylène tétrafluoroéthylène (PETFE), ou un mélange de celles-ci.

Les filaments de fibres 76 sont par exemple agencés sous forme de mèches longitudinales comportant une pluralité de filaments de fibres 76 liés mécaniquement les uns aux autres par retordage, par groupage parallèle ou par filage d'un ensemble de fibres ou de filaments continus ou discontinus.

Au sens de l'invention, on entend plus généralement par « mèche » un ensemble ou groupe de fils continus retordus ou non retordus ensemble, chaque fil pouvant être un monofilament ou pouvant être un ensemble de fibres ou de filaments continus ou discontinus, assemblés notamment par retordage ou filage.

Le cas échéant, une mèche peut être obtenue par un assemblage de plusieurs mèches élémentaires, par retordage ou simplement par un groupage parallèle de plusieurs mèches élémentaires.

Dans l'industrie des fibres, on utilise le terme anglais « tow » pour désigner des mèches constituées de fibres élémentaires. Le nombre de fibres élémentaires que comporte une mèche est généralement un multiple de 6000, les valeurs usuelles étant typiquement 6000, 12000, 18000, 24000, 30000, 36000, 42000, 48000, 56000 et 60000. Les mèches comportant au moins 48000 fibres sont désignées par le terme anglais « heavy tow ».

La mèche comporte avantageusement entre 6000 et 60000 fibres élémentaires.

Le diamètre de chaque fibre est avantageusement compris entre 6 micromètres et 12 micromètres, typiquement de l'ordre de 8 micromètres. La dimension transversale maximale des mèches est typiquement comprise entre 0,5 mm et 2 mm.

En variante, les filaments de fibres 76 sont dispersés uniformément dans la matrice 74, sans être maintenus sous forme de mèches.

Les filaments de fibres 76, éventuellement sous forme de mèches, sont noyés dans la matrice 74.

Le cœur de renfort 70 formé par la matrice 74 contenant les filaments de fibres 76 est par exemple de type ultra-dense. Ceci signifie que le taux de filaments de fibres 76, pris en volume par rapport au volume total des filaments de fibres 76 et de la matrice 74 dans le cœur de renfort 70 est supérieur à 50 %, avantageusement supérieur ou égal à 55 %, et de préférence supérieur ou égal à 60 % .

Les fibres sont de préférence des fibres de carbone. En variante, les fibres sont des fibres de verre, d'aramide, de basalte, de céramique, de bore, de zylon.

Ainsi, l'élément d'armure 29 est particulièrement robuste. Il présente une résistance longitudinale à la rupture supérieure à 2000 MPa, et notamment supérieure à 2700 MPa, et un allongement à la rupture supérieur à 1,5% notamment supérieur à 1,6%, ces deux caractéristiques étant mesurées selon la norme ASTM D3039.

Dans l'exemple représenté sur la figure 2, le cœur de renfort 70 présente une forme sensiblement homothétique à celle du corps longiligne.

L'enveloppe 72 est de préférence réalisée en matériau polymère.

De manière avantageuse, l'enveloppe 72 peut comprendre des charges. Les charges sont par exemple de type sphérique tel que des microbilles de diamètres compris entre 5 µm et 10 µm. Les microbilles peuvent être en verre, en carbone, en résine de type époxy ou phénol. Dans un autre exemple, les charges peuvent être de type non sphérique tel que du mica sous forme d'écailles d'épaisseur de 1 µm à 20 µm et de longueur comprise entre 10 µm et 50 µm ou des poudres telles que des carbonates, des silicates, des silices ou du noir de carbone. De telles charges confèrent à l'enveloppe 72 des propriétés de dureté et de résistance améliorée ainsi qu'une meilleure stabilité dimensionnelle.

Avantageusement, l'enveloppe 72 peut comporter des fibres de renfort telles que des fibres courtes, notamment de longueur inférieure à 1 mm et de diamètre inférieur à 15 µm ou des micro-fibres, de diamètre inférieur à 2 µm et de longueur inférieure à 50 µm. Ceci lui confère des propriétés de rigidité améliorée et de résistance à l'abrasion.

Encore plus avantageusement, l'enveloppe 72 peut comporter un mélange de charges et de fibres telles que définies ci-dessus.

Le matériau polymère destiné à former l'enveloppe 72 est par exemple une résine thermoplastique de type polyamide (PA), polypropylène (PP), polyfluorure de vinylidène (PVDF), polyétheréthercétone (PEEK), polyaryléthercétone (PEAK), polyéthercétonecétone (PEKK), polyéthylène (PE), polyphénylène sulphide (PPS), polyoxyméthylène (POM), polyphénylsulfone (PPSU), polyéthylène de masse molaire très élevée (UHMPE), une résine thermodurcissable époxy, vinyl ester, polyester, polyuréthane ou une résine élastomérique telle qu'un polyisoprène naturel (NR), styrène butadiène (SBR), éthylène propylène diène monomère (EPDM) ou un polyéthylène chlorosulfoné (CSM).

L'enveloppe 72 est par exemple formée par extrusion ou par dépôt par projection. L'épaisseur de l'enveloppe 72 est par exemple comprise entre 0,1 mm et 0,5 mm.

En variante, l'enveloppe 72 est formée d'un mat de fibres ou d'un tissu imprégnés d'une résine du type précédemment décrite. Dans cet exemple, l'enveloppe 72 définit extérieurement les surfaces 40 à 46. L'enveloppe 72 entoure totalement le cœur de renfort 70.

Les éléments d'armures 29 sont enroulés en hélice autour de la gaine externe 20 et de la voûte de pression 28, en formant des spires successives pour constituer la couche d'armures 22, 24. Les surfaces latérales 44, 46 des spires successives de l'élément d'armure 29 sont disposées adjacentes les unes aux autres, sans recouvrement.

Les éléments d'armures 29 ne sont pas agrafés les uns aux autres. Ils sont libres de se déplacer latéralement. Ceci limite les contraintes au sein des éléments d'armures 29 et ainsi réduit les risques de délamination des éléments d'armures 29.

La conformation ainsi obtenue des éléments d'armures 29 permet un appui de l'élément d'armure 29 sur la couche intérieure 41 au niveau des régions latérales 62, 64 en disposant d'une région centrale 60 présentant un creux 48 adapté à la forme de la couche intérieure 41, sans contact avec celle-ci.

Ainsi, la distance entre le sommet 54 de la surface intérieure 40 et la couche intérieure 41 sur laquelle est disposé l'élément d'armure 29 est généralement comprise entre 0,1 mm et 0,7 mm pour un rayon de pose de 200 mm à 400 mm et un angle d'enroulement compris entre 25° et 35°.

Ceci garantit une meilleure résistance au cisaillement, en évitant la séparation longitudinale de l'élément d'armure 29 et en conservant une résistance longitudinale maximisée.

Cette résistance étant optimisée, et une enveloppe 72 étant avantageusement disposée autour du cœur de renfort 70, il est possible de réduire l'espacement entre les spires successives de l'élément d'armure 29 pour se rapprocher de l'espacement généralement utilisé pour des armures en métal.

La mise en œuvre de l'enveloppe 72 par extrusion ou par dépôt par projection est particulièrement simple à réaliser.

Ainsi, il est possible d'augmenter la profondeur à laquelle la ligne flexible 10 peut être disposée, pour une section transversale d'élément d'armure 29 constante. L'élément d'armure 29 résistant au cisaillement est donc utilisable à des plus grandes profondeurs par rapport à un élément d'armure de section rectangulaire ayant la même épaisseur.

L'enveloppe 72 de protection permet en outre de s'affranchir dans certains cas de l'utilisation de bandes de protections intermédiaires et fournit une protection et une barrière thermique utile pour augmenter la durée de vie de la couche d'armure et donc de la ligne flexible 10.

La gaine externe 30 est destinée à empêcher la perméation de fluide depuis l'extérieur de la ligne flexible 10 vers l'intérieur. Elle est réalisée en polymère.

Dans l'exemple représenté sur la figure 1, la conduite flexible est avantageusement « non liée » (« unbonded » en anglais). En variante, la conduite est de type liée (« bonded » en anglais).

Un procédé de fabrication de l'élément d'armure 29 va maintenant être décrit.

Ce procédé comprend une étape de fourniture de filaments de fibres 76 de carbone, une étape de mise en forme des filaments de fibres 76, puis une étape de formation de la matrice 74.

Le procédé comporte ensuite une étape optionnelle de traitement pour réticuler la matrice 74.

A l'étape de fourniture de filaments de fibres 76, des bobines de filaments de fibres 76 sont fournies.

Eventuellement, les filaments de fibres 76 peuvent être préchauffés, par irradiation aux infrarouges par exemple, afin de réduire les défauts susceptibles d'apparaître à l'interface fibres/résine.

Puis, à l'étape de mise en forme, les filaments de fibres 76 sont déroulés à travers une filière destinée à recevoir le matériau précurseur de la matrice 74.

Le matériau précurseur est entendu comme étant un mélange formé du polymère thermodurcissable ou thermoplastique et d'un initiateur de réaction et éventuellement de charges. Par exemple, dans le cas d'une matrice 74 thermodurcissable, l'initiateur de réaction comprend un durcisseur et éventuellement un accélérateur de réaction.

Lorsque le corps longiligne est réalisé par pultrusion, à partir d'un matériau thermodurcissable, le matériau précurseur du matériau thermodurcissable est amené à travers la filière pour noyer les filaments de fibres 76.

Puis, le matériau précurseur est chauffé à une température inférieure à 280°C pour réaliser le durcissement de la résine.

A l'étape de traitement, le corps longiligne en forme de ruban ainsi obtenu est traité thermiquement, à une température inférieure à 220°C pour assurer une réticulation de la matrice 74.

Puis, l'enveloppe 72 est formée autour du cœur de renfort 70, par extrusion ou dépôt par projection. Le dépôt par projection peut être réalisé selon le procédé de projection thermique, de projection à froid (ou « cold spray ») ou par plasma atmosphérique. Un traitement thermique supplémentaire est alors réalisé permettant le chauffage de l'enveloppe 72.

Selon une première variante, l'enveloppe 72 peut être formée autour du cœur de renfort 70 par extrusion en sortie de pultrusion. Le traitement thermique de l'enveloppe 72 est réalisé après l'étape d'extrusion de l'enveloppe 72.

Selon une seconde variante, l'enveloppe 72 est traitée thermiquement avant le traitement thermique des filaments de fibres 76.

En général, la forme (rectangulaire ou en « forme d'os ») de l'enveloppe 72 est réalisée durant l'étape d'extrusion. La filière possède donc une géométrie semblable à la section de l'enveloppe 72 recherchée.

Par ailleurs, le procédé peut comprendre une étape supplémentaire de rectification afin d'améliorer l'état de surface de l'élément d'armure 29.

L'élément d'armure 29 ainsi obtenu peut ensuite être enroulé autour de l'élément allongé formé dans cet exemple par la gaine interne 20, avec interposition éventuelle de la voûte de pression 22.

Dans la variante illustrée par la figure 3, la surface extérieure 42 est plane et est dépourvue de creux 50. Les surfaces latérales 44, 46 sont également planes et définissent des coins 58 anguleux avec la surface extérieure 42.

La surface intérieure 40 définit un creux 48 analogue à celui du corps longiligne représenté sur la figure 2.

Par ailleurs, le corps longiligne de la figure 3 est dépourvu d'enveloppe 72. Il est constitué d'un cœur de renfort 70 tel que défini précédemment.

L'élément d'armure 29 représenté sur la figure 4 diffère de l'élément d'armure 29 illustré sur la figure 2 en ce qu'il est dépourvu d'enveloppe 72. Le corps longiligne est constitué par un cœur de renfort 70 tel que défini plus haut.

L'élément d'armure 29 représenté sur la figure 5 diffère de l'élément d'armure 29 représenté sur la figure 3 en ce que les coins 58 entre la surface supérieure 42 et les surfaces latérales 44, 46 sont arrondis.

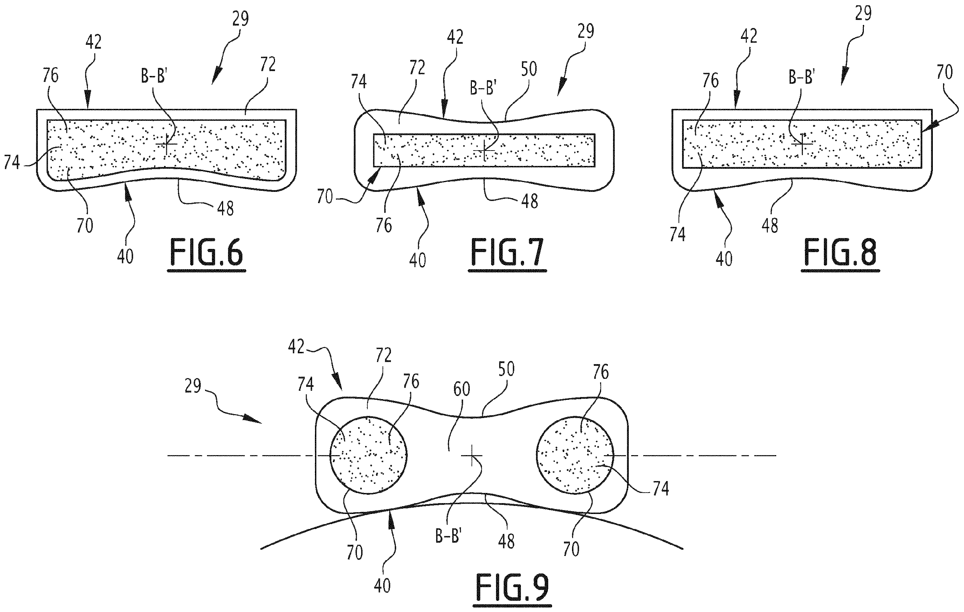

L'élément d'armure 29 représenté sur la figure 6 diffère de l'élément d'armure 29 représenté sur la figure 3 par la présence d'une enveloppe 72 telle que définie plus haut.

L'élément d'armure 29 représenté sur la figure 7 diffère de l'élément d'armure 29 représenté sur la figure 2 en ce que le cœur de renfort 70 présente une forme non homothétique au contour extérieur de l'élément d'armure 29, défini par l'enveloppe 72.

Avantageusement, le cœur de renfort 70 présente une section transversale de contour polygonal, ici rectangulaire.

L'épaisseur de l'enveloppe 72 varie donc autour de l'élément 70. Les creux 48, 50 sont définis dans l'épaisseur de l'enveloppe 72.

L'élément d'armure 29 représenté sur la figure 8 diffère de celui représenté sur la figure 6 en ce qu'il comporte un cœur de renfort 70 analogue à celui de la figure 7.

L'élément de renfort 29 illustré sur la figure 9 diffère de celui illustré sur la figure 2 en ce qu'il comporte deux cœurs de renfort 70 longitudinaux disposés de part et d'autre de l'axe longitudinal B-B' du corps longiligne.

La région centrale 60 est formée du même matériau que l'enveloppe 72. Elle raccorde latéralement les cœurs de renfort 70 situés de part et d'autre de l'axe B-B'.

Dans l'exemple représenté sur la figure 9, chaque cœur de renfort 70 présente, en section transversale, un contour circulaire ou arrondi, notamment elliptique. Les cœurs de renfort 70 sont disposés dans les régions latérales 62, 64.

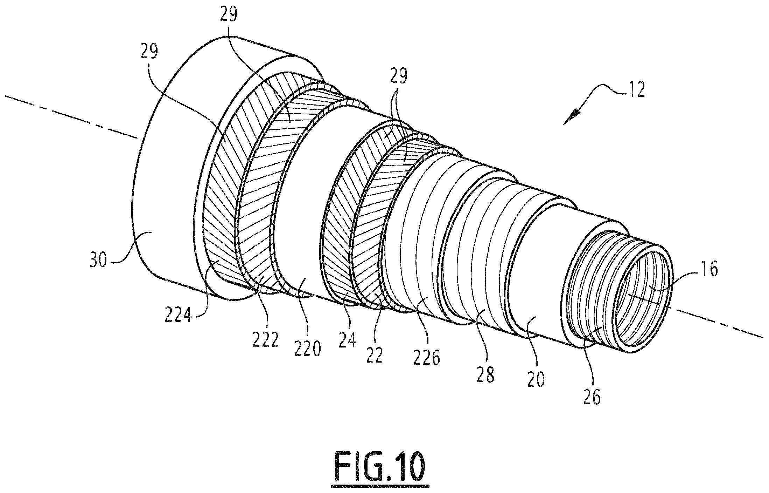

La figure 10 illustre une deuxième ligne flexible 12 selon l'invention. A la différence de la première ligne flexible 10 représentée sur la figure 1, elle comporte, entre les couches d'armures 22, 24 et la gaine externe 30, une gaine intermédiaire 220, et deux couches d'armures additionnelles 222, 224 formées avantageusement d'éléments d'armures 29 selon l'invention, tels que décrits plus haut.

La ligne flexible 12 comporte en outre avantageusement une frette 226, interposée entre la voûte de pression 28 et les couches d'armure 22, 24.

Dans une variante (non représentée), l'élément de renfort comprend une surface intérieure 40 définissant un creux 48 et une surface extérieure 42 convexe.

## Revendications

1. Élément d'armure d'une ligne flexible (10) destinée à être placée dans une étendue d'eau (12), comportant :
- un corps longiligne en matériau composite, le corps longiligne délimitant une surface intérieure (40) destinée à être orientée vers un axe central (A-A') de la ligne flexible (10) et une surface extérieure (42) destinée à être orientée à l'opposé d'un axe central (A-A') de la ligne flexible (10) ;
au moins la surface intérieure (40) définissant un creux (48; 50) central ;
**caractérisé en ce que** le creux (48, 50) est délimité en section transversale par une ligne courbe (52) présentant un sommet (54), l'épaisseur (e1) du corps longiligne, prise au niveau du sommet (54) étant inférieure à l'épaisseur (e2) du corps longiligne, prise à l'écart du creux (48; 50).

2. Élément d'armure selon la revendication 1, dans lequel la profondeur du creux (48; 50), prise au niveau du sommet (54), est comprise entre 3 % et 50 % de l'épaisseur maximale du corps longiligne.

3. Élément d'armure selon la revendication 1 ou 2, dans lequel la profondeur du creux (48; 50), prise au niveau du sommet (54), est comprise entre 0,1 mm et 0,5 mm.

4. Élément d'armure selon l'une quelconque des revendications précédentes, dans lequel chacune de la surface intérieure (40) et de la surface extérieure (42) définit le creux (48; 50) central délimité en section transversale par la ligne courbe (52) présentant le sommet (54), l'épaisseur (e1) du corps longiligne, prise au niveau du sommet (54), étant inférieure à l'épaisseur (e2) du corps longiligne, prise à l'écart du creux (48; 50).

5. Élément d'armure selon l'une quelconque des revendications précédentes, dans lequel le corps longiligne comporte au moins un cœur de renfort (70) comprenant une matrice (74) polymère et des filaments de fibres (76), avantageusement en fibres de carbone, noyées dans la matrice (74).

6. Élément d'armure selon la revendication 5, dans lequel les filaments de fibres (76) s'étendent longitudinalement par rapport à un axe longitudinal (B-B') du corps longiligne.

7. Élément d'armure selon l'une quelconque des revendications 5 à 6, dans lequel la matrice (74) est réalisée à base d'une résine thermoplastique notamment choisie parmi les résines polyméthylméthacrylate (PMMA), polyacrylate, polyacrylonitrile (PAN), polyamide (PA ou Nylon), polyamide-imide (PAI), polyaryléthercétone (PAEK), polyoléfine telle qu'un polyéthylène (PE) ou un polypropylène (PP), polycarbonate (PC), polycétone (PK), polyester, polyétheréthercétone (PEEK), polyéthercétonecétone (PEKK), polyétherimide (PEI), polyimide (PI), polystyrène (PS), polyéthersulfone (PES), polyphénylène sulphide (PPS), polysulfone (PSU), polymère fluoré thermoplastique tel que le polyfluorure de vinylidène (PVDF), le polytétrafluoroéthylène (PTFE), le polychlorotrifluoroéthylène (PCTFE), le polyéthylène chlorotrifluoroéthylène (PECTFE) ou le polyéthylène tétrafluoroéthylène (PETFE), ou un mélange de celles-ci, ou à partir d'une résine thermodurcissable telle qu'une résine époxy, polyimide, bismaléimide, polyuréthane ou polyisocyanurate, aminoplaste, une résine urée-formaldéhyde (UF), mélamine formaldéhyde (MF) ou phénol-formaldéhyde (PF), une résine polyester insaturé (UP), une résine vinylester (VE) ou un mélange de celles-ci.

8. Élément d'armure selon l'une quelconque des revendications 5 à 7, dans lequel le corps longiligne comporte une enveloppe (72), avantageusement en matériau polymère, entourant le cœur de renfort (70).

9. Élément d'armure selon la revendication 8, dans lequel le ou chaque creux (48; 50) est ménagé dans l'enveloppe (72).

10. Élément d'armure selon l'une quelconque des revendications 8 ou 9, dans lequel le corps longiligne comprend un cœur de renfort (70) de section transversale polygonale, avantageusement rectangulaire.

11. Élément d'armure selon l'une quelconque des revendications 8 à 10, dans lequel le corps longiligne comprend au moins deux cœurs de renfort (70) disjoints raccordés l'un à l'autre par une région centrale (60) avantageusement formée du même matériau que l'enveloppe (72).

12. Élément d'armure selon l'une quelconque des revendications 8 à 11, dans lequel l'enveloppe (72) est obtenue par extrusion ou par projection.

13. Élément d'armure selon l'une quelconque des revendications 5 à 11, dans lequel le cœur de renfort (70) est obtenu par pultrusion.

14. Ligne flexible destinée à être placée dans une étendue d'eau (12), comportant :
- un élément allongé ;
- au moins un élément d'armure (29) selon l'une quelconque des revendications précédentes, enroulé dans l'élément allongé ou enroulé autour de l'élément allongé.

15. Ligne flexible selon la revendication 14, dans laquelle l'élément allongé est une gaine interne (20) délimitant un passage (16) de circulation d'un fluide, l'élément d'armure (29) étant enroulé autour de la gaine interne (20).

## Patentansprüche

1. Verstärkungselement einer flexiblen Leitung (10), welche dazu vorgesehen ist, in einem Gewässer (12) platziert zu werden, aufweisend:
- einen länglichen Körper aus Verbundmaterial, wobei der längliche Körper eine innere Fläche (40), welche dazu vorgesehen ist, in Richtung zu einer zentralen Achse (A-A') der flexiblen Leitung (10) zugewandt zu sein, und eine äußere Fläche (42), welche dazu vorgesehen ist, von einer zentralen Achse (A-A') der flexiblen Leitung (10) abgewandt zu sein, begrenzt,
wobei mindestens die innere Fläche (40) eine zentrale Einbuchtung (48; 50) definiert,
**gekennzeichnet dadurch, dass** die Einbuchtung (48, 50) im Querschnitt durch eine gekrümmte Linie (52), welche einen Scheitel (54) aufweist, begrenzt ist, wobei die auf Niveau des Scheitels (54) genommene Dicke (e1) des länglichen Körpers kleiner als die abseits der Einbuchtung (48, 50) genommene Dicke (e2) des länglichen Körpers ist.

2. Verstärkungselement nach Anspruch 1, wobei die Tiefe der Einbuchtung auf Niveau des Scheitels (54) genommen zwischen 3% und 50% der maximalen Dicke des länglichen Körpers beträgt.

3. Verstärkungselement nach Anspruch 1 oder 2, wobei die Tiefe der Einbuchtung auf Niveau des Scheitels (54) genommen zwischen 0,1 mm und 0,5 mm beträgt.

4. Verstärkungselement nach irgendeinem der vorhergehenden Ansprüche, wobei jede von der inneren Fläche (40) und der äußeren Fläche (42) die zentrale Einbuchtung (48; 50) definiert, welche im Querschnitt durch die gekrümmte Linie (52), welche den Scheitel (54) aufweist, begrenzt ist, wobei die auf Niveau des Scheitels (54) genommene Dicke (e1) des länglichen Körpers kleiner als die abseits der Einbuchtung (48, 50) genommene Dicke (e2) des länglichen Körpers ist.

5. Verstärkungselement nach irgendeinem der vorhergehenden Ansprüche, wobei der längliche Körper mindestens einen Verstärkungskern (70) aufweist, welcher eine Polymermatrix (74) und Faserfäden (76), bevorzugt aus Kohlefasern, welche in die Matrix (74) eingebettet sind, aufweist.

6. Verstärkungselement nach Anspruch 5, wobei die Faserfäden (76) sich longitudinal bezüglich einer Längsachse (B-B') des länglichen Körpers erstrecken.

7. Verstärkungselement nach Anspruch 5 oder 6, wobei die Matrix (74) hergestellt ist auf Grundlage eines thermoplastischen Kunststoffs, der ausgewählt ist aus den Harzen Polymethylmethacrylat (PMMA), Polyacrylat, Polyacrylnitril (PAN) Polyamid (PA oder Nylon), Polyamidimid (PAI), Polyaryletherketon (PAEK), Polyolefin, wie ein Polyethylen (PE) oder ein Polypropylen (PP), Polycarbonat (PC), Polyketon (PK), Polyester, Polyetheretherketon (PEEK), Polyetherketonketon (PEKK), Polyetherimid (PEI), Polyimid (PI), Polystyrol (PS), Polyethersulfon (PES), Polyphenylsulfid (PPS), Polysulfon (PSU), thermoplastische Fluorpolymer, wie das Polyvinylidenfluorid (PVDF), das Polytetrafluorethylen (PTFE), das Polychlortrifluorethylen (PCTFE), das Polyethylen-Chlortrifluorethylen (PECTFE) oder das Polyethylen-Tetrafluorethylen (PETFE), oder einer Mischung aus diesen, oder ausgehend von einem duroplastischen Harz, wie einem Epoxidharz, Polyimid, Bismaleimid, Polyurethan oder Polyisocyanurat, Aminoplast, einem Harnstoff-Formaldehyd-Harz (UF), Melamin-Formaldehyd-Harz (MF) oder Phenol-Formaldehyd-Harz (PF), einem ungesättigtes Polyester-Harz (UP), einem Vynilester-Harz (VE) oder einer Mischung aus diesen.

8. Verstärkungselement nach irgendeinem der Ansprüche 5 bis 7, wobei der längliche Körper eine Hülle (72), vorteilhafterweise aus Polymermaterial, aufweist, welche den Verstärkungskern (70) umgibt.

9. Verstärkungselement nach Anspruch 8, wobei die oder jede Einbuchtung (48; 50) in der Hülle (72) ausgebildet ist.

10. Verstärkungselement nach irgendeinem der Ansprüche 8 oder 9, wobei der längliche Körper einen Verstärkungskern (70) mit polygonalen, vorteilhafterweise rechteckigen, Querschnitt aufweist.

11. Verstärkungselement nach irgendeinem der Ansprüche 8 bis 10, wobei der längliche Körper mindestens zwei getrennte Verstärkungskerne (70) aufweist, welche miteinander durch einen mittigen Bereich (60), welcher vorteilhafterweise aus dem gleichen Material wie die Hülle (72) ausgebildet ist, verbunden sind.

12. Verstärkungselement nach irgendeinem der Ansprüche 8 bis 11, wobei die Hülle (72) durch Extrusion oder durch Projizieren erlangt wird.

13. Verstärkungselement nach irgendeinem der Ansprüche 5 bis 11, wobei der Verstärkungskern (70) durch Pultrusion erlangt wird.

14. Flexible Leitung, welche dazu vorgesehen ist, in einem Gewässer (12) platziert zu werden, aufweisend:
- ein langgestrecktes Element,
- mindestens ein Verstärkungselement (29) nach irgendeinem der vorhergehenden Ansprüche, welches in dem langgestreckten Element hineingewickelt ist oder um das langgestreckte Element herumgewickelt ist.

15. Flexible Leitung nach Anspruch 14, wobei das langgestreckte Elemente ein innerer Mantel (20), welcher einen Durchgang (16) zur Zirkulation eines Fluids begrenzt, ist, wobei das Verstärkungselement (29) um den inneren Mantel (20) herumgewickelt ist.

## Claims

1. Element for reinforcing a flexible line (10) intended to be placed in a body of water (12), comprising:
- a straight body made of composite material, the straight body defining an inner surface (40) intended for being oriented towards a central axis (A-A') of the flexible line (10) and an outer surface (42) intended for being oriented opposite a central axis (A-A') of the flexible line (10);
at least the inner surface (40) defining a central recess (48; 50);
**characterised in that** the recess (48, 50) is defined cross-sectionally by a curved line (52) with an apex (54), the thickness (e1) of the straight body, taken at the apex (54) being less than the thickness (e2) of the straight body, taken at a point other than the recess (48; 50).

2. Reinforcing element according to claim 1, wherein the depth of the recess (48; 50), taken at the apex (54), is between 3% and 50% of the maximum thickness of the straight body.

3. Reinforcing element according to claim 1 or 2, wherein the depth of the recess (48; 50), taken at the apex (54), is between 0.1 mm and 0.5 mm.

4. Reinforcing element according to any of the previous claims, wherein each of the inner surface (40) and of the outer surface (42) defines the central recess (48; 50) defines a cross-section by the curved line (52) presenting the apex (54), the thickness (e1) of the straight body, taken at the apex (54), being less than the thickness (e2) of the straight body, taken at a point other than the recess (48; 50).

5. Reinforcing element according to any of the previous claims, wherein the straight body comprises at least a reinforcing core (70) comprising a polymer matrix (74) and fibre filaments (76), advantageously in carbon fibres, embedded in the matrix (74).

6. Reinforcing element according to claim 5, wherein the fibre filaments (76) extend longitudinally against a longitudinal axis (B-B') of the straight body.

7. Reinforcing element according to any of claims 5 to 6, wherein the matrix (74) is made from a thermoplastic resin notably chosen from among the resins polymethylmethacrylate (PMMA), polyacrylate, polyacrylonitrile (PAN), polyamide (PA or Nylon), polyamide-imide (PA1), polyaryletherketone (PAEK), polyolefin 35 such as un polyethylene (PE) or un polypropylene (PP), polycarbonate (PC), polyketone (PK), polyester, polyetheretherketone (PEEK), polyetherketoneketone (PEKK), polyetherimide (PEI), polyimide (PI), polystyrene (PS), polyethersulfone (PES), Polyphenylene Sulfide (PPS), polysulfone (PSU), thermoplastic fluoropolymer such as polyvinylidene difluoride (PVDF), polytetrafluoroethylene (PTFE), polychlorotrifluoroethylene (PCTFE), polyethylene chlorotrifluoroethylene (PECTFE) or 5 polyethylene tetrafluoroethylene (PETFE), or a mix of two or more of these, or from a thermosetting resin such as an epoxy resin, polyimide, bismaleimide, polyurethane or polyisocyanurate, aminoplast, a urea-formaldehyde resin (UF), melamine-formaldehyde (MF) or phenol-formaldehyde (PF), an unsaturated polyester resin (UP), a vinylester resin (VE) or a mix of two or more of these.

8. Reinforcing element according to any of claims 5 to 7, wherein the straight body comprises a shell (72), advantageously in polymeric material, surrounding the reinforcing core (70).

9. Reinforcing element according to claim 8, wherein the or each recess (48; 50) is made in the shell (72).

10. Reinforcing element according to any of claims 8 or 9, wherein the straight body comprises a polygonal, advantageously rectangular cross-section reinforcing core (70).

11. Reinforcing element according to any of claims 8 to 10, wherein the straight body comprises at least two disjointed reinforcing cores (70) connected to one another by a central region (60) advantageously formed from the same material as the shell (72).

12. Reinforcing element according to any of claims 8 to 11, wherein the shell (72) is obtained by extrusion or by projection.

13. Reinforcing element according to any of claims 5 to 11, wherein the reinforcing core (70) is obtained by pultrusion.

14. Flexible line intended to be placed in a body of water (12),
comprising:
- an elongated element;
- at least one reinforcing element (29) according to any of the previous claims, wound in the elongated element or wound around the elongated element.

15. Flexible line according to claim 14, wherein the elongated element is an inner sheath (20) defining a fluid flow path (16), the reinforcing element (29) being wound around the inner sheath (20).
